# EUROPEAN PATENT APPLICATION

(11) **EP 4 800 855 A1**
(43) Date of publication of application: **02.09.2026**
(21) Application number: 25160469.0
(22) Date of filing: 27.02.2025
(51) Int. Cl.: H01R 13/66, G06F 21/44, G06F 21/81, H01R 24/30, H01R 24/78, H04W 4/80

(54) **PLUG, SOCKET, SYSTEM FOR IDENTIFICATION OF ELECTRICAL DEVICE AND METHOD OF IDENTIFICATION OF EXTERNAL ELECTRICAL DEVICE**

(71) Applicant: ABB SCHWEIZ AG, 5400 Baden (CH)
(72) Inventor: Ahmad, Mukhtar, 31-158 Krakow (PL); Bacher, Szymon, 30-047 Krakow (PL)
(74) Representative: AOMB Polska Sp. z.o.o.

(57) **Abstract**

The invention discloses a plug (1) comprising a shaped part for accommodating within it at least two terminals (7), means for electrical transfer suitable for connecting with an electrical device, connecting an at least two protruding pins (9) for transferring electricity from a power supply, wherein the shaped part comprises a front section suitable for being in contact with a socket (2), wherein the least two protruding pins (9) are mounted in the front section, wherein the shaped part further comprises an electronic tag (3) configured to transmit information stored in the electronic tag (3). The invention discloses also a socket (2) for electrical connection with a plug (1) comprising a mounting box (6) accommodating at least two terminals (7), wherein the mounting box (6) comprises a face plate (5) suitable for interconnection with the plug (1) and at least two wires providing electricity, the at least two terminals (7) are mounted in the face plate and suitable for receiving at least two protruding pins (9) of the plug (1) and transferring current from the wires to the at least two protruding pins (9) of the plug (1), wherein the mounting box (6) further comprises an electronic tag reader for reading an electronic tag (3) and retrieving data and a current. Further the invention discloses a system for an identification of an electrical device comprising a plug (1) and a socket (2), a transmitting means and an evaluation means. The plug (1) is plugged in the socket (2) providing reading an electronic tag (3) by an electronic reader, thereby providing data exchange between the electronic tag (3) and the electronic tag reader. The invention further discloses a method of identification of external electrical device.

## Description

### Technical field

The present invention relates to a smart system and more precisely to identification of an external electrical device utilizing a plug and a socket which cooperate within a system a method.

### Background of the disclosure

The state of the art discloses several disadvantages associated with the use of electric devices, leading to significant operational disruptions and financial losses. These drawbacks include equipment failure and unplanned downtime, affecting various industries.

Typical maintenance tools and approaches, which generally rely on reactive strategies, fail to address the above-mentioned drawbacks before they escalate and significantly impact the devices or systems. Escalation or delayed response to failures results in increased repair costs, extended equipment downtime, and reduced overall efficiency.

There is a growing need for a robust predictive and preventative maintenance system capable of leveraging advanced data analytics and real-time monitoring. Such a system would identify potential equipment failures before they occur, reducing the risk of unexpected downtime and costly repairs. By continuously analyzing performance metrics and environmental conditions, the system can optimize maintenance schedules, improve resource allocation, and extend the lifespan of equipment. Furthermore, this approach enhances operational reliability, minimizes disruptions, and supports more efficient and sustainable industrial processes.

### Summary of the disclosure

It is a goal of this invention to provide a predictive and preventative system to identify an electronic device and its consumption data.

According to the first aspect of the present invention there is provided a plug comprising
a shaped part for accommodating within it at least two terminals, means for electrical transfer suitable for connecting with an electrical device, connecting an at least two protruding pins for transferring electricity from a power supply, wherein the shaped part comprises a front section suitable for being in contact with a socket,
wherein the least two protruding pins are mounted in the front section,
wherein the shaped part further comprises an electronic tag configured to transmit information stored in the electronic tag.
the means for electrical transfer is a cable or a port for power delivery and connecting an electronic device.
the front section of the shaped part comprises the electronic tag.

Preferably, it comprises a grounding, preferably the grounding is a grounding pin or a grounding clip or a hole suitable for receiving a socket's earthing pin.

In one embodiment, the electronic tag is radio frequency identification, RFID, preferably operating in frequency suitable for near-field communication, NFC.

The electrical tag is suitable to store information about standard power consumption profile of an electrical device.

According to the second aspect of the present invention there is provided a socket for electrical connection with a plug comprising
a mounting box accommodating at least two terminals, wherein the mounting box comprises
a face plate suitable for interconnection with the plug and at least two wires providing electricity,
the at least two terminals are mounted in the face plate and suitable for receiving at least two protruding pins of the plug and transferring current from the wires to the at least two protruding pins of the plug,
wherein the mounting box further comprises an electronic tag reader for reading an electronic tag and retrieving data and a current.

Preferably, the face plate of the mounting box comprises the electronic tag reader.

In one of the preferred embodiments, the electronic tag reader is radio frequency identification, RFID, reader, preferably operating in frequency suitable for a near-field communication, NFC.

In one embodiment, it comprises an earthing wire.

It comprises a power sensor for providing power usage data, preferably an instantaneous power consumption profile.

In one embodiment, the power sensor is suitable for storing a standard power consumption profile of an electrical device.

According to the third aspect of the present invention there is provided a system for an identification of an electrical device comprising
a plug,
a socket, wherein the plug is plugged in the socket providing reading an electronic tag by an electronic reader, thereby providing data exchange between the electronic tag and the electronic tag reader,
a transmitting means for transmitting data from the electronic tag reader to an evaluation means,
and the evaluation means for retrieving transmitted data.

Preferably, the transmitting means is a Bluetooth, a wireless network, GSM module, GPRS module, a wire transmitter or a cable suitable for connecting the plug and an electronic device.

The evaluation means is a computer, a smart phone, a display device or a memory card.

In one of the preferred embodiments, data exchange is provided between the electronic tag, the electronic tag reader and a power sensor and further the transmitting means are suitable for transmitting data from the electronic tag reader and the power sensor to the evaluation means.

According to the fourth aspect of the present invention there is provided a method of identification of an external electrical device comprising steps of:
a) Providing an electronic device, a plug with an electronic tag and a socket with an electronic tag reader and/or a power sensor,
b) Retrieving data identifying the electronic device from the electric tag when the plug is connected with the socket and both are accommodated for data transfer,
c) Transmitting retrieved data from the electric tag, by a transmitting means, to an evaluation means for retrieving transmitted data,
d) Receiving the transmitted data by the evaluation means.

In one embodiment, the electronic tag reader is suitable for recognizing the electrical device and further it comprises the step d1) of limiting transferring current to the plug of an unrecognized external electrical device.

Step b) of retrieving data is performed by retrieving data identifying the electronic device from the electric tag and power consumption data from a power sensor.

Preferably, step c) of transmitting retrieved data is performed by transmitting retrieved data from the electric tag and the power sensor.

In one of the preferred embodiments, it further comprises a step d2) of limiting transferring current upon receiving power consumption data from the power sensor.

Preferably, step b) of retrieving data is performed by retrieving data identifying the electronic device and its standard power consumption profile from the electric tag by the electric tag reader Step b) of retrieving data is performed by retrieving data identifying the electronic device by the electric tag reader and the standard power consumption profile by the power sensor.

### Advantages of the disclosure

According to the disclosure, the effect of the invention is to provide effective recognition of an electronic device and its pre-determined data and record its power consumption profile. It enables comparison of a stored power consumption profile with the real-time power consumption profile for detecting potential faults and reacting before the electronic device reaches a critical failure point. The present invention provides universal and easy to use system for any kind of plugs and sockets. The present invention provides a universal and user-friendly system compatible with various types of plugs and sockets. It further provides restriction of power supply to unrecognized electric devices thereby enhancing safety and preventing unauthorized usage. It further provides power consumption limits on specific electronic devices.

### Brief description of the drawings

The present disclosure will be discussed with reference to drawings, where:
Fig. 1- depicts a plug with an electronic tag on a front section of a shaped part,
Fig. 2 - depicts the plug with the electronic tag on a side of the shaped part,
Fig. 3 - depicts a socket,
Fig. 4 - discloses a cross-section of the socket with a power measurement circuit of an electronic tag reader.

### Detailed description of the disclosure

For a proper understanding of the disclosure, in the detailed description below, corresponding elements or parts of different embodiments will be denoted with identical reference numerals in the drawings.

The present invention relates to data transfer between a socket 2 and a plug 1 in order to identify an electric device and preferably acquire power consumption data and fault detection. Fault detection is preferably performed by comparing a standard power consumption profile for the appropriate device. The standard power consumption profile is preferably stored locally in the socket or in the plug or in a cloud associated with an evaluation means.

The present invention discloses the plug 1 comprising a shaped part accommodating within it at least two terminals 7, means for electrical transfer suitable for connecting with an electrical device, and this shaped part is connecting an at least two protruding pins 9. The shaped part comprises a front section suitable for being in contact with a socket 2. The protruding pins 9 are suitable for transferring electricity from a power supply and are mounted in the front section. The shaped part comprises an electronic tag 3 configured to transmit information stored in the electronic tag 3.

Each plug 1 is dedicated to the electric device and contains its associated data. This data is implemented in the electronic tag 3 comprising information about a type of device, unique ID pre-assigned to a specific device and preferably comprises the standard power consumption profile dedicated for this specific device.

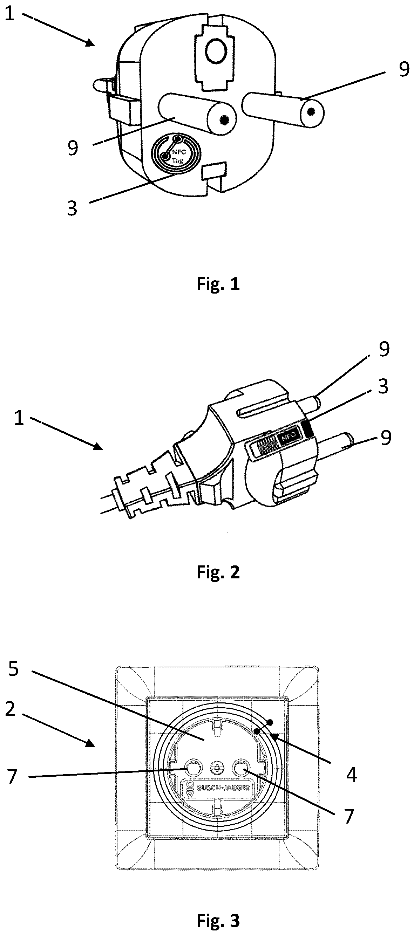

This solution discloses the possibility of using a standard plug 1. In one embodiment of the invention the means for electrical transfer is a cable like it is disclosed in Fig. 1. In another embodiment, the means for electrical transfer is a port for power delivery and connecting an electronic device. This port could be a USB port or HDMI port or any other possible port. The advantage of this solution is its universality regarding the type of plug 1.

The electronic tag 3 can be positioned anywhere on the plug 1, enabling it to connect with an electronic tag reader located in the corresponding socket 2. In one embodiment it can be positioned on the front section of the shaped part like it shown on Fig. 1. In another embodiment, the electronic tag 3 may be positioned at any desired location as it is shown on Fig. 2 where the electronic tag 3 is located on a side of the plug 1. An advantage of the electronic tag 3 is the ease of placing on the plug 1. The electronic tag 3 can be a sticker or is embedded in the shaped part of the plug

The plug 1 could be any standard plug 1 like a plug 1 A, plug 1 B, plug 1 B. The present invention discloses plugs 1 with different numbers and construction of the protruding pins 9 and type and construction of a grounding. In one embodiment the plug 1 does not contain the grounding. In another embodiment it comprises the grounding, preferably the grounding is a grounding pin or a grounding clip or a hole suitable for receiving a socket's 2 earthing pin.

The electronic tag 3 is able to transfer data and could be any system which is able to achieve this goal. In one preferably embodiment the electronic tag 3 is radio frequency identification, RFID. It is known as electronic tagging. This technology enables contactless automatic identification of objects using radio frequency signals, allowing for data retrieval without manual intervention. RFID systems operate effectively in various frequency ranges. The preferable range is 13.5 MHz which is used most widely for secured Near-field-communication, NFC. An advantage is excellent performance even in challenging environments. The corresponding and cooperating socket 2 is integrated with an RFID system. In another embodiment when other systems for data transfer are applied, the electronic tag 3 and the electronic tag reader are integrated to transfer and receive data.

In this embodiment of the invention the electrical tag 3 is suitable to store information about a standard power consumption profile of the specific device. This data is provided in the electric tag 3 and further is read by the electrical tag 3 reader providing comparison of the power consumption profiles. In another embodiment, the standard power consumption profile is stored in an evaluation means in a database and the comparison occurs in the evaluation means. In another embodiment, the standard power consumption profile is stored in the socket 2.

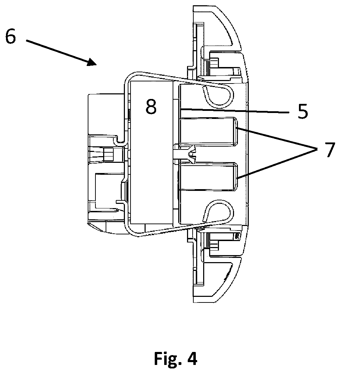

The present invention discloses a socket 2 for electrical connection with a plug 1 as described above. The socket 2 comprises a mounting box 6 accommodating at least two terminals 7 and at least two wires providing electricity. The mounting box 6 comprises a face plate suitable for interconnection with the plug 1. The at least two terminals 7 are mounted in the face plate and are suitable for receiving at least two protruding pins 9 of the plug 1 and transferring current from the wires to the at least two protruding pins 9 of the plug 1. The mounting box 6 further comprises an electronic tag reader for reading an electronic tag 3 and retrieving data and a current. The electronic tag reader can be a sticker or is embedded in the mounting box 6. The electronic tag reader may comprise an antenna which is preferably an NFC antenna 4 configured to read NFC as it is depicted on Fig. 3. Fig. 4 discloses a placement of a power measurement circuit 8 of the electronic tag reader.

The electronic tag reader can be positioned anywhere on the socket 2, enabling it to connect with an electronic tag 3 located in the corresponding plug 1 and retrieve data. In one embodiment the face plate of the mounting box 6 comprises the electronic tag reader and/or the power sensor. The electronic tag 3 can be positioned anywhere on the plug, provided it remains within the electronic tag reader's maximum range of, preferably 4 cm. Preferably, the electronic tag 3 is a passive device that functions only in close proximity to the electronic tag reader. The electronic tag reader, which is preferably embedded in the socket 2, supplies power to the electronic tag 3 and read the data.

The electronic tag reader is able to read and retrieve data and could be any system which is able to achieve this goal. In one preferably embodiment the electronic tag reader is radio frequency identification, RFID, reader. The preferable operating range is 13.5 MHz which is used most widely for secured Near-field- communication, NFC.

The socket 2 could be any standard socket 2 suitable to cooperate with the standard plug 1 and its grounding. In one embodiment, the socket 2 does not include a component designed to accommodate the grounding pin of the plug 1 and an earthing wire. In another embodiment it comprises the component designed to accommodate the grounding pin of the plug 1 and an earthing wire.

In this embodiment of the invention, the socket 2 comprises a power sensor for providing power usage data. The power sensor is suitable for storing an instantaneous power consumption profile of an electronic device upon plugging the plug 1 in the socket 2. The power sensor is preferably embedded in the socket 2.

In this embodiment of the invention, the power sensor is suitable for storing a standard power consumption profile of an electrical device. It stores the standard power consumption profile of the specific device in order to compare with the instantaneous power consumption profile for fault detection. Data is further transferred to an evaluation means.

The present invention discloses a system for an identification of an electrical device. Such system comprises a plug 1 and a socket 2 as described above, a transmitting means and an evaluation means. The plug 1 is plugged in the socket 2 in such way to provide reading an electronic tag 3 by an electronic reader, thereby providing data exchange between electronic tag 3 and an electronic tag reader. The transmitting means are suitable for transmitting data from the electronic tag reader to the evaluation means. The evaluation means are suitable for retrieving transmitted data.

In one embodiment the transmitting means is a Bluetooth, a wireless network, GSM module, GPRS module, a wire transmitter or a cable suitable for connecting the plug 1 and an electronic device. The transmitting means could be any means which are able to transfer data to the evaluation means. This transfer can be conducted wirelessly or via a wired connection. The transmitting means are preferably positioned in a face plate of the mounting box 6.

The evaluation means in one embodiment is a computer, a smart phone, a display device or a memory card. The evaluation means are designed to retrieve the transferred data and perform further analysis. Preferably, they are convenient to use during maintenance, allowing for quick response and inspection.

In one embodiment, where a power sensor is provided in the socket, data exchange is provided between the electronic tag 3, the electronic tag reader and a power sensor. Preferably, the transmitting means are suitable for transmitting data from the electronic tag reader and the power sensor to the evaluation means. The evaluation means preferably receives and records its power consumption profile enabling effective energy monitoring. The system is preferably for the identification of an electrical device and monitoring a power consumption.

The present invention discloses a method of identification of external electrical device and monitoring a power consumption comprising steps of:
a) Providing an electronic device, a plug 1 with an electronic tag 3 as described above and a socket 2 with an electronic tag reader and/or a power sensor as described above,
b) Retrieving data identifying the electronic device from the electric tag when the plug 1 is connected with the socket 2 and both are accommodated for data transfer,
c) Transmitting retrieved data from the electric tag, by a transmitting means, to an evaluation means for retrieving transmitted data,
d) Receiving the transmitted data by the evaluation means.

In one embodiment, step b) of retrieving data is performed by retrieving data identifying the electronic device from the electric tag and power consumption data from a power sensor. Upon connecting the plug 1, the electronic tag reader identifies the electronic device and records its power consumption profile by the current sensor, enabling effective energy monitoring, and fault detection. It is the instantaneous power consumption profile. Further in one embodiment, step c) of transmitting retrieved data is performed by transmitting retrieved data from the electric tag and the power sensor to the evaluation means. The method is preferably for identification of external electrical device and monitoring a power consumption.

In one embodiment the method is designed to restrict power supply to unrecognized electronic devices, thereby enhancing safety and preventing unauthorized usage. The electronic tag reader is suitable for recognizing the electrical device and further it comprises the step d1) of limiting transferring current to the plug 1 of an unrecognized external electrical device. In one embodiment it allows an implementation of power consumption limits on specific devices. It further comprises a step d2) of limiting transferring current upon receiving power consumption data from the power sensor.

In one embodiment, step b) of retrieving data is performed by retrieving data identifying the electronic device and its standard power consumption profile from the electric tag by the electric tag reader. This embodiment occurs when the standard power consumption profile is stored in the electric tag. In another embodiment, step b) of retrieving data is performed by retrieving data identifying the electronic device by the electric tag reader and the standard power consumption profile by the power sensor. This embodiment occurs when the standard power consumption profile of the electrical device is stored in the power sensor.

## Claims

1. A plug (1) comprising
a shaped part for accommodating within it at least two terminals (7), means for electrical transfer suitable for connecting with an electrical device, connecting an at least two protruding pins (9) for transferring electricity from a power supply, wherein the shaped part comprises a front section suitable for being in contact with a socket (2),
wherein the least two protruding pins (9) are mounted in the front section,
wherein the shaped part further comprises an electronic tag (3) configured to transmit information stored in the electronic tag (3).

2. The plug (1) according to claim 1, **wherein** the electronic tag (3) is radio frequency identification, RFID, preferably operating in frequency suitable for near-field communication, NFC.

3. The plug (1) according to claim 1 or 2, **wherein** the electrical tag is suitable to store information about standard power consumption profile of an electrical device.

4. A socket (2) for electrical connection with a plug (1) as described in claims 1-3 comprising a mounting box (6) accommodating at least two terminals (7), wherein the mounting box (6) comprises a face plate (5) suitable for interconnection with the plug (1) and at least two wires providing electricity,
the at least two terminals (7) are mounted in the face plate and suitable for receiving at least two protruding pins (9) of the plug (1) and transferring current from the wires to the at least two protruding pins (9) of the plug (1),
**wherein** the mounting box (6) further comprises an electronic tag reader for reading an electronic tag (3) and retrieving data and a current.

5. The socket (2) according to claim 4, **wherein** the electronic tag reader is radio frequency identification, RFID, reader, preferably operating in frequency suitable for a near-field communication, NFC.

6. The socket (2) according to claim 4 or 5, **wherein** comprises a power sensor for providing power usage data, preferably an instantaneous power consumption profile, preferably the power sensor is suitable for storing a standard power consumption profile of an electrical device.

7. A system for an identification of an electrical device comprising
a plug (1) according to any of claims 1-3,
a socket (2) according to any of claims 4-6, wherein the plug (1) is plugged in the socket (2) providing reading an electronic tag (3) by an electronic tag reader, thereby providing data exchange between the electronic tag (3) and the electronic tag reader,
a transmitting means for transmitting data from the electronic tag reader to an evaluation means,
and the evaluation means for retrieving transmitted data.

8. The system according to claim 7, **wherein** the transmitting means is a Bluetooth, a wireless network, GSM module, GPRS module, a wire transmitter or a cable suitable for connecting the plug (1) and an electronic device, and wherein the evaluation means is a computer, a smart phone, a display device or a memory card.

9. The system according to claim 7 or 8, **wherein** data exchange is provided between the electronic tag (3), the electronic tag reader and a power sensor and further the transmitting means are suitable for transmitting data from the electronic tag reader and the power sensor to the evaluation means.

10. A method of identification of an external electrical device comprising steps of:
a) Providing an electronic device, a plug (1) with an electronic tag (3) according to claim 1-3 and a socket (2) with an electronic tag reader and/or a power sensor according to claims 4-6,
b) Retrieving data identifying the electronic device from the electric tag when the plug (1) is connected with the socket (2) and both are accommodated for data transfer,
c) Transmitting retrieved data from the electric tag, by a transmitting means, to an evaluation means for retrieving transmitted data,
d) Receiving the transmitted data by the evaluation means.

11. The method according to claim 10, **wherein** the electronic tag reader is suitable for recognizing the electrical device and further it comprises the step d1) of limiting transferring current to the plug (1) of an unrecognized external electrical device, preferably it further comprises a step d2) of limiting transferring current upon receiving power consumption data from the power sensor.

12. The method according to claim 10 or 11, **wherein** step b) of retrieving data is performed by retrieving data identifying the electronic device from the electric tag and power consumption data from a power sensor.

13. The method according to claim 12, **wherein** step c) of transmitting retrieved data is performed by transmitting retrieved data from the electric tag and the power sensor.

14. The method according to any of the proceeding claims, **wherein** step b) of retrieving data is performed by retrieving data identifying the electronic device and its standard power consumption profile from the electric tag by the electric tag reader.

15. The method according to any of claims 10-13, **wherein** step b) of retrieving data is performed by retrieving data identifying the electronic device by the electric tag reader and the standard power consumption profile by the power sensor.
